# DEMANDE DE BREVET EUROPEEN

(11) **EP 1 331 506 A1**
(43) Date de publication de la demande: **30.07.2003**
(21) Numéro de dépôt: 03356010.3
(22) Date de dépôt: 28.01.2003
(51) Int. Cl.: G02C 7/16, G02C 11/00

(54) **Elément de potection corporelle et paire de lunettes pourvue d'un tel élément de protection**

(30) Priorité: 29.01.2002 FR 0201051
(71) Demandeur: Sochay, Jean-Marc, 01590 Dortan (FR)
(72) Inventeur: Sochay, Jean-Marc, 01590 Dortan (FR)
(74) Mandataire: Myon, Gérard

(57) **Abrégé**

Cet élément de protection présente la forme d'un masque (1) muni de moyens (8, 11, 13, 14) pour son montage de manière amovible sur la face arrière d'une paire de lunettes (2). Ce masque (1) est percé de deux ouvertures (4) destinées à être placées devant les yeux d'un utilisateur portant la paire de lunettes (2).

## Description

La présente invention se rapporte à la protection, par exemple contre le soleil ou le vent, des yeux d'une personne portant une paire de lunettes de soleil et/ou de correction. Plus précisément, elle concerne un élément de protection corporelle, destiné à équiper une paire de lunettes, ainsi qu'une paire de lunettes pourvue d'un tel élément de protection.

Il est connu d'équiper chacune des deux branches d'une paire de lunettes de soleil avec l'une de deux pièces latérales de cuir, dont chacune est à la fois fixée à un côté de la monture de cette paire de lunettes et liée à une branche de manière à s'étendre le long de cette branche.

La présence de ces pièces de cuir améliore, certes, la protection qu'offre cette paire de lunettes de soleil, généralement prévue pour une utilisation en montagne.

Toutefois, des progrès peuvent être encore réalisés en la matière. Tel est donc au moins l'un des buts que l'invention entend atteindre.

A cet effet, l'invention a pour objet un élément de protection corporelle, caractérisé en ce qu'il présente la forme d'un masque muni de moyens pour son montage de manière amovible sur la face arrière d'une paire de lunettes, ce masque étant percé de deux ouvertures destinées à être placées devant les yeux d'un utilisateur portant la paire de lunettes.

L'invention a également pour objet une paire de lunettes, caractérisée en ce qu'elle est pourvue d'un élément de protection tel que défini ci-dessus, le masque étant monté à l'aide des moyens pour son montage, sur la face arrière de la paire de lunettes, chacune des deux optiques de la paire de lunettes s'étendant devant l'une des deux ouvertures percées dans le masque.

L'invention sera bien comprise à la lecture de la description qui va suivre, donnée uniquement à titre d'exemple et faite en se référant aux dessins annexés, sur lesquels :
- la figure 1 est une vue en plan d'un masque de protection conforme à l'invention ; et
- la figure 2 est une vue en perspective de la tête d'une personne portant une paire de lunette conforme à l'invention et pourvue du masque de la figure 1.

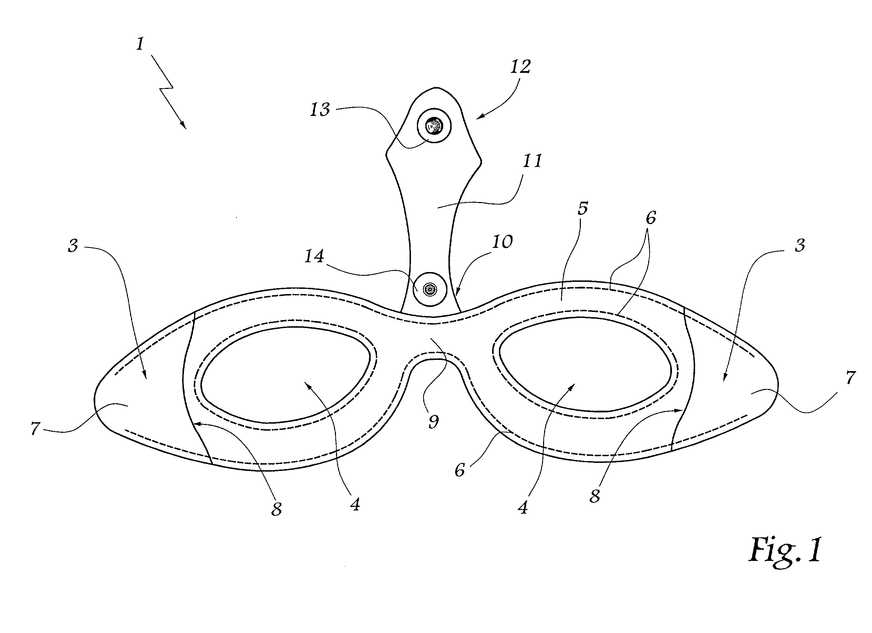

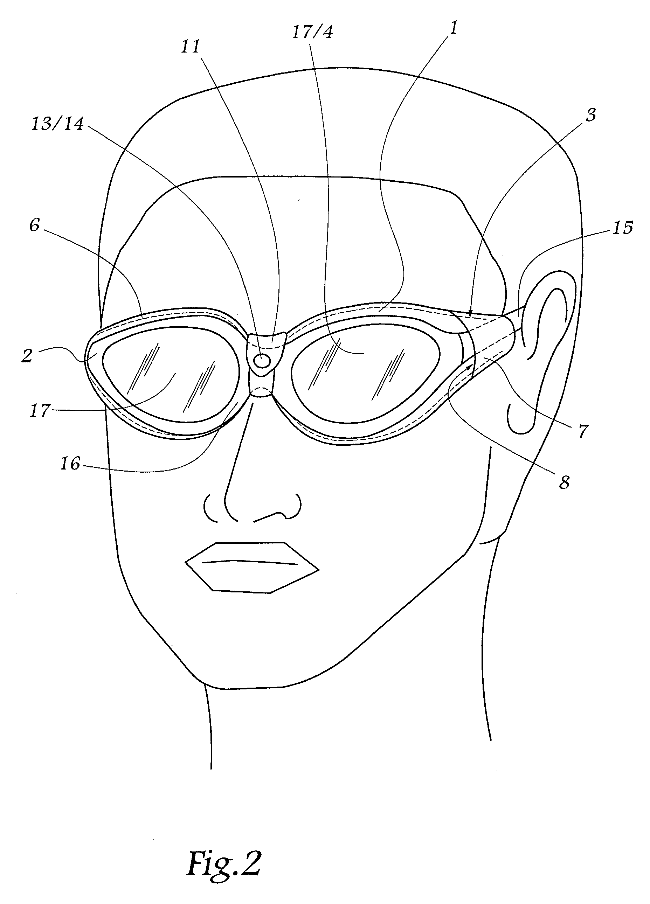

La figure 1 représente un masque 1 qui est conforme à l'invention et destiné à équiper une paire de lunettes 2, visible à la figure 2.

Dans l'ensemble de la demande, les termes « haut », « bas », « avant », « arrière », et « latéral », ainsi que les termes semblables, se réfèrent à l'orientation du masque 1 et de la paire de lunettes 2 par rapport à un utilisateur portant l'ensemble.

Le masque 1 a globalement la forme d'une monture d'une paire de lunettes, sauf en ce qu'il se termine latéralement par deux ailes d'extrémités globalement triangulaires 3. Il est percé de deux ouvertures oblongues 4, destinées à découvrir les yeux de l'utilisateur.

Le masque 1 est réalisé à l'aide d'une feuille avant 5 et d'une feuille arrière que masque cette feuille avant 5 sur les figures 1 et 2. La feuille avant 5 est réalisée en chlorure de polyvinyle (PVC) expansé et renforcé par une nappe de fils tissés (SKAÏ, marque déposée), tandis que la feuille arrière est une pièce de cuir. Ces feuilles avant 5 et arrière sont découpées selon une même forme, qui est celle du masque 1. Elles sont placées de manière que leurs bords respectifs coïncident et sont unies à l'aide de coutures 6 longeant ces bords. Elles retiennent entre elles un rembourrage non visible sur les figures 1 et 2.

Chacune des ailes d'extrémité 3 est recouverte d'une pièce triangulaire 7 qui est cousue sur la feuille avant 5 et forme avec elle un passant 8.

Les portions gauche et droite du masque 1 sont reliées entre elles par une portion intermédiaire 9, à laquelle est cousue une extrémité 10 d'un lien souple formé par une bande 11. Chacune des deux extrémités 10 et 12 de cette bande 11 est pourvue de l'une des deux parties complémentaires 13 et 14, aptes à s'unir et se désunir, d'un bouton pression.

Les pièces triangulaires 7 et la bande 10 sont réalisées dans le même matériau que la feuille avant 5.

Pour monter le masque 1 sur la face arrière de la paire de lunettes 2, on passe chacune des deux branches latérales 15 de cette paire de lunettes 2 dans l'un des passants 8. Ensuite, on enroule la bande 10 autour de la monture 16 de la paire de lunettes 2, entre les deux optiques 17 de celle-ci, puis on unit les deux parties complémentaires 13 et 14 du bouton pression. Le masque 1 est alors monté essentiellement sur l'arrière de la paire de lunettes 2, c'est-à-dire entre le visage de l'utilisateur et la monture 16. Il s'applique contre la face arrière de cette paire de lunettes 2 et dépasse vers l'extérieur de la monture 16.

Ce masque 1 présentant l'avantage d'être amovible, il peut être retiré en appliquant la procédure inverse de celle qui vient d'être décrite, et qui est particulièrement simple.

Sur la figure 2, un utilisateur porte la paire de lunettes 2 pourvue du masque 1. Ce dernier s'applique alors à la fois sur la monture 16 et sur le visage de l'utilisateur, si bien qu'il réalise une étanchéité qui protège efficacement les yeux de l'utilisateur contre les rayons du soleil et contre le vent, conformément au but de l'invention.

Lorsque l'utilisateur fait du ski ou de la moto, et plus généralement quand il possède une certaine vitesse, le vent qui résulte de cette vitesse applique les portions du masque 1 qui dépassent de la monture 16 sur son visage, ce qui va avantageusement dans le sens d'une amélioration de l'étanchéité précitée.

Par ailleurs, le masque 1 présente l'avantage de rendre la paire de lunettes 2 plus confortable à porter. De plus, il isole thermiquement le visage de l'utilisateur de la monture 16, ce qui est avantageux par temps froid. Il a également tendance à protéger le visage de l'utilisateur lors d'un accident provoquant le bris des lunettes 2.

L'invention ne se limite pas au mode de réalisation décrit précédemment. En particulier, tout ou partie du masque 1 peut être réalisée en mousse, en silicone et/ou en tissu.

De plus, les coutures 6 peuvent être remplacées par des lignes de soudure.

## Revendications

1. Elément de protection corporelle, **caractérisé en ce qu'**il présente la forme d'un masque (1) muni de moyens (8, 11, 13, 14) pour son montage de manière amovible sur la face arrière d'une paire de lunettes (2), ce masque (1) étant percé de deux ouvertures (4) destinées à être placées devant les yeux d'un utilisateur portant la paire de lunettes (2).

2. Elément de protection selon la revendication 1, **caractérisé en ce que** les moyens pour son montage comprennent des moyens (8) de montage sur deux branches latérales de maintien (15) qui équipent la paire de lunettes (2).

3. Elément de protection selon la revendication 2, **caractérisé en ce que** les moyens de montage sur les deux branches latérales de maintien comprennent deux passants (8), chacun apte à être enfilé sur l'une desdites branches latérales de maintien (15).

4. Elément de protection selon l'une quelconque des revendications précédentes, **caractérisé en ce que** lesdits moyens pour son montage comprennent des moyens (11, 13, 14) de montage entre les deux optiques (17) de la paire de lunettes (2), sur un élément (16) de la paire de lunettes (2) reliant ces deux optiques (17).

5. Elément de protection selon la revendication 4, **caractérisé en ce que** les moyens de montage entre les deux optiques (17) comprennent un lien souple (11) apte à entourer l'élément (16) reliant ces deux optiques (17), ce lien souple (11) ayant deux extrémités opposées (10, 12) pourvues de moyens complémentaires (13, 14) aptes à s'unir et se désunir.

6. Elément de protection selon l'une quelconque des revendications précédentes, **caractérisé en ce que** le masque (1) est souple ou semi-rigide.

7. Elément de protection selon la revendication 6, **caractérisé en ce qu'**il comporte des feuilles (5) avant et arrière, qui sont découpées selon la forme du masque (1) et sont unies.

8. Elément de protection selon la revendication 6 ou 7, **caractérisé en ce que** le masque (1) est réalisé en matériau rembourré.

9. Paire de lunettes, **caractérisée en ce qu'**elle est pourvue d'un élément de protection selon l'une quelconque des revendications précédentes, le masque (1) étant monté à l'aide des moyens (8, 11, 13, 14) pour son montage, sur la face arrière de la paire de lunettes (2), chacune des deux optiques (17) de la paire de lunettes (2) s'étendant devant l'une des deux ouvertures (4) percées dans le masque (1).

10. Paire de lunettes selon la revendication 9, **caractérisée en ce que** sur au moins une partie du pourtour de chacune des deux optiques (17) de la paire de lunettes (2), le masque (1) dépasse vers l'extérieur de cette paire de lunettes (2).
